# EUROPEAN PATENT SPECIFICATION

(11) **EP 4 544 197 B1**
(45) Date of publication and mention of the grant of the patent: **11.03.2026**
(21) Application number: 22736321.5
(22) Date of filing: 22.06.2022
(51) Int. Cl.: F16C 9/02, F16C 17/02, F16C 33/10

(54) **MAIN BEARING FOR A CRANKSHAFT OF A PISTON ENGINE**
HAUPTLAGER FÜR EINE KURBELWELLE EINER KOLBENMASCHINE
PALIER PRINCIPAL POUR UN VILEBREQUIN D'UN MOTEUR A PISTONS

(43) Date of publication of application: 30.04.2025
(73) Proprietor: Wärtsilä Finland Oy, 65170 Vaasa (FI)
(72) Inventor: HALLA-AHO, Pasi, 65170 Vaasa (FI); ISTOLAHTI, Jaakko, 65170 Vaasa (FI); VESALA, Jukka-Pekka, 65170 Vaasa (FI); LEPPÄKANGAS, Janne Joonas, 65170 Vaasa (FI)
(74) Representative: Berggren Oy
(86) International application number: PCT/FI2022/050448
(87) International publication number: WO 2023/247816

(56) References cited:
- WO-A2-2007/016915
- FR-A1- 2 668 217
- JP-A- 2005 273 715
- JP-A- 2007 225 079
- JP-A- 2016 130 534
- JP-A- H0 893 769
- JP-U- H0 432 320

## Description

### Technical field of the invention

The present invention concerns a main bearing of a piston engine, as defined in claim 1. The invention also concerns a piston engine.

### Background of the invention

The crankshaft of a piston engine is supported against an engine block by means of bearings, which can be referred to as main bearings. The pistons are connected to the crankshaft by means of connecting rods. The bearings connecting the connecting rods to the crankshaft can be referred to as big end bearings and the bearings connecting the pistons to the connecting rods can be referred to as small end bearings.

The main bearings, big end bearings and small end bearings need lubrication. In large piston engines, such as marine or power plant engines, the main bearings are typically lubricated via the engine block. The crankshaft is provided with drillings, via which the lubrication oil is supplied to the big end bearings. Also the connecting rods are provided with drillings, via which the lubrication oil can be supplied to the small end bearings.

A typical main bearing of a large piston engine is provided with an oil groove, which extends over part of the circumference of the bearing. When the drillings of the crankshaft are in fluid communication with the oil groove, lubricating oil can flow into the drillings.

During use of the engine, the bearings wear via different wear mechanisms. One wear mechanism that particularly affects the main bearings is cavitation wear. Cavitation refers to a phenomenon, in which small vapor-filled cavities are formed in a liquid due to a pressure drop. When the pressure of the liquid then increases, the cavities collapse and generate shock waves, which cause wear. Pressure fluctuations are caused in the main bearings via different mechanisms. One mechanism relates to the sudden closing of the drillings of the crankshaft.

### Summary of the invention

An object of the present invention is to provide an improved bearing shell for a main bearing of a piston engine. The characterizing features of the main bearing according to the invention are given in claim 1. Other objects of the invention are to provide a piston engine, as defined in other claims. A main bearing according to the preamble of claim 1 is known from FR 2 668 217 A1.

The main bearing according to the invention has an inner surface forming a bearing surface, the inner surface of the bearing shell being provided with a first oil groove arranged in the circumferential direction of the bearing shell at a first end of the bearing shell, the first oil groove comprising a first portion having a constant width. The first oil groove comprises a second portion forming a continuation for the first portion in the circumferential direction of the bearing shell, the second portion being narrower than the first portion.

Due to the second portion of the first oil groove, flow into a drilling of a crankshaft journal is not suddenly cut when an oil inlet of the journal exits the area of the first portion of the first oil groove, but flow into the drilling can continue with a limited flow rate when the oil inlet is at the area of the second portion. This prevents forming of underpressure in a lower part of the bearing shell and prevents shock waves following the underpressure.

According to an embodiment of the invention, the cross-sectional area of the second portion is smaller than the cross-sectional area of the first portion.

According to an embodiment of the invention, the width of the second portion of the first oil groove is smaller than the diameter of an oil inlet of a crankshaft journal, for which the bearing is configured.

According to an embodiment of the invention, the width of the first portion of the first oil groove is 15-30 percent of the width of the bearing shell.

According to an embodiment of the invention, the width of the second portion of the first oil groove is 5-50 percent of the width of the first portion. According to an embodiment of the invention, the width of the second portion is 5-20 percent of the width of the first portion. If the second portion is too narrow, it does not allow sufficient flow to prevent the cavitation. On the other hand, a too wide second portion does not sufficiently limit the flow into the drilling of the crankshaft journal.

According to an embodiment of the invention, the depth of the first portion of the first oil groove decreases towards the second portion.

According to an embodiment of the invention, the depth of the second portion of the first oil groove decreases towards the end located away from the first portion.

According to an embodiment of the invention, the first portion of the first oil groove extends over an angle of 10-30 degrees.

According to an embodiment of the invention, the second portion of the first oil groove extends over an angle of 10-30 degrees.

According to an embodiment of the invention, the cross-section of the second portion of the first oil groove is V-shaped, rectangular, semicircular or elliptic.

According to an embodiment of the invention, the bearing shell comprises a second oil groove, arranged at a second end of the bearing shell.

According to an embodiment of the invention, the second oil groove comprises a first portion and a second portion forming a continuation for the first portion, the second portion being narrower than the first portion. The second oil groove can be identical to the first oil groove. That is not necessary, but by providing the bearing shell with identical oil grooves arranged at opposite ends of the bearing shell, the same bearing shells can be used in both clockwise and counterclockwise rotating engines.

The main bearing according to the invention comprises a first, lower bearing shell and a second, upper bearing shell, wherein the first bearing shell is a bearing shell defined above.

According to an embodiment of the invention, the second bearing shell has an inner surface forming a bearing surface, the inner surface of the second bearing shell being provided with an oil groove extending over the whole bearing shell in the circumferential direction of the bearing shell.

The piston engine according to the invention comprises a main bearing defined above.

### Brief description of the drawings

Embodiments of the invention are described below in more detail with reference to the accompanying drawings, in which
Fig. 1 shows an example of a lower bearing shell of a prior art main bearing,
Fig. 2 shows an example of an upper bearing shell of a prior art main bearing,
Fig. 3 shows a perspective view of a bearing shell according to an embodiment of the invention,
Fig. 4 shows a plan view of the bearing shell of Fig. 3,
Figs. 5A-5C show a cross-sectional view of a main bearing according to an embodiment of the invention at different crank angles.

### Detailed description of the invention

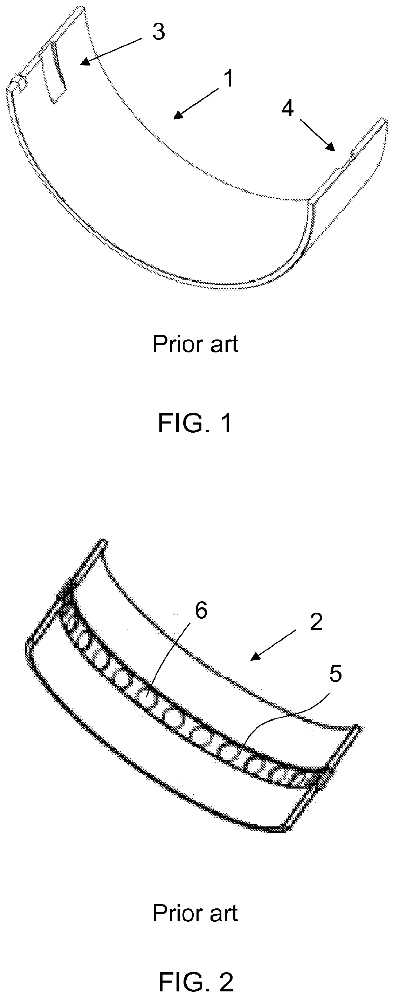

Figures 1 and 2 show prior art bearing shells 1, 2 of a main bearing of a piston engine. Figure 1 shows a lower half of the bearing and figure 2 an upper half of the bearing. The engine where the bearing can be used is a large internal combustion engine, such as a main or an auxiliary engine of a ship or an engine that is used at a power plant for producing electricity. The engine has a cylinder bore of at least 150 mm. Each cylinder of the engine is provided with a piston that moves in a reciprocating manner in the cylinder. The engine can have any reasonable number of cylinders.

The pistons are connected via connecting rods to a crankshaft. The connecting rod connects the piston to the crankshaft and converts the reciprocating motion of the piston to the rotating motion of the crankshaft.

The crankshaft is mounted in an engine block via the main bearings. A main bearing is arranged on each side of each connecting rod. The main bearings are plain bearings.

The upper bearing shell 2 of figure 2 comprises an oil groove 5. The oil groove 5 is arranged on the inner surface of the bearing shell 2. The oil groove 5 of the upper bearing shell 2 extends over the whole bearing shell 2 in the circumferential direction of the bearing shell. The upper bearing shell 2 is provided with oil holes 6. The oil holes 6 are arranged along the oil groove 5 and allow supplying lubricating oil from the outer side of the bearing into the oil groove 5.

The lower bearing shell 1 of figure 1 comprises a first oil groove 3 and a second oil groove 4. The first oil groove 3 is arranged at a first end of the bearing shell 1 in the circumferential direction and the second oil groove 4 is arranged at a second end. Each of the first oil groove 3 and the second oil groove 4 extends over an angle of approximately 20 degrees. The widths of the first and second oil groove 3, 4 correspond to the width of the oil groove 5 of the upper bearing shell 1. The first and second oil grooves 3, 4 are configured to be connected to the oil groove 5 of the upper bearing shell 2 to form a continuous oil groove.

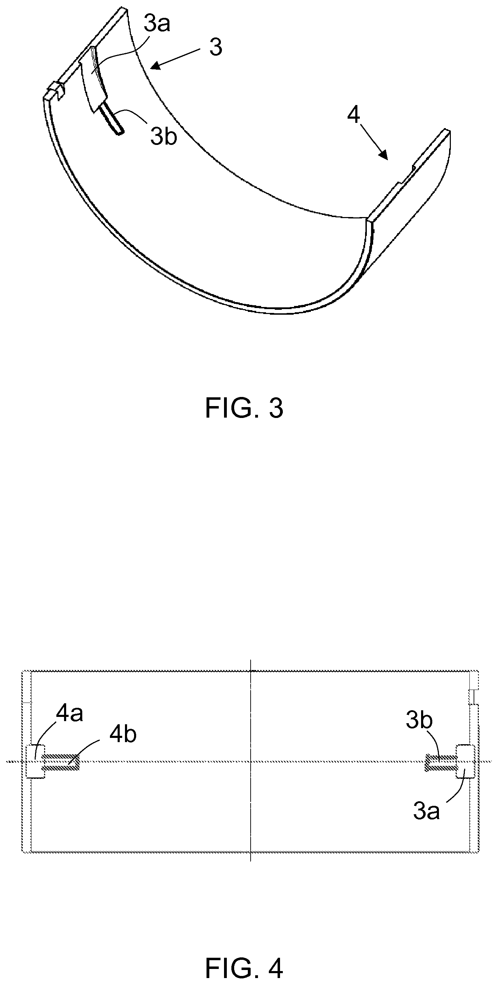

Figures 3 and 4 show a bearing shell 1 according to an embodiment of the invention. The bearing shell 1 can be used as a lower bearing shell in a main bearing of a piston engine, such as an engine described above in connection with the discussion of the prior art.

The bearing shell 1 has a semicircular shape. The bearing shell 1 has an inner surface that forms a bearing surface. The bearing surface is provided with a first oil groove 3 and with a second oil groove 4. The first oil groove 3 is arranged in the circumferential direction of the bearing shell 1 at a first end of the bearing shell 1. The second oil groove 4 is arranged at a second end of the bearing shell 1.

The first oil groove 3 comprises a first portion 3a and a second portion 3b. The first portion 3a begins from the first end of the bearing shell 1. It can thus from a continuation for an oil groove of another bearing shell. The first portion 3a has a constant width. In the embodiment of the figures, the width of the first portion 3a is approximately 20 percent of the width of the bearing shell 1 in the axial direction. The width of the first portion 3a could be, for instance, in the range of 10-30 percent of the width of the bearing shell 1.

The second portion 3b forms a continuation for the first portion 3a. The second portion 3b is narrower than the first portion 3a. In the embodiment of the figures, the width of the second portion 3b is approximately 40 percent of the width of the first portion 3a. The width of the second portion 3b could be, for instance, in the range of 5-50 percent of the width of the first portion 3a. The width of the second portion 3b can be constant.

The depth of the second portion 3b can be the same as the depth of the first portion 3a, or the depths can be different. The second portion 3b can be either deeper or less deep than the first portion 3a. Preferably, the cross-sectional area of the second portion 3b is smaller than the cross-sectional area of the first portion 3a. The depths of the first portion 3a and the second portion 3b do not need to be constant. The depth of the first portion 3a can decrease towards the second portion 3b. Similarly, the depth of the second portion 3b can decrease towards the end located away from the first portion 3a.

In the embodiment of the figures, the first portion 3a extends over an angle of approximately 20 degrees in the circumferential direction of the bearing shell 1. Also the second portion 3b extends over an angle of approximately 20 degrees. The first portion 3a could extend, for instance, over an angle of 10-30 degrees. Similarly, the second portion 3b could extend, for instance, over an angle of 10-30 degrees.

Different cross-sectional shapes of the second portion 3b are possible. The cross-section of the second portion 3b could be, for instance, V-shaped, rectangular, semicircular or elliptic. In the embodiment of the figures, the cross-section is rectangular.

The bearing shell 1 is configured to be mounted so that the rotation direction of the crankshaft is from the first end of the bearing shell 1 towards the second end. A certain point on the perimeter of a crankshaft journal thus first enters the area of the first portion 3a of the first oil groove 3.

In the embodiment of figures 3 and 4, also the second oil groove 4 comprises a first portion 4a and a second portion 4b. The first and second portions 4a, 4b of the second oil groove 4 are configured in a similar way as the corresponding portions 3a, 3b of the first oil groove 3. As the first and second oil grooves 3, 4 are identical with each other, the same bearing shells 1 could be used both in clockwise and counterclockwise rotating engines.

The bearing shell 1 according to the invention can be used in a main bearing, where the upper bearing shell is a bearing shell according to the state of the art. The upper bearing shell 2 could be, for example, the bearing shell 2 of figure 2. The first oil groove 3 and the second oil groove 4 of the lower bearing shell 1 thus form a continuous oil groove together with the oil groove 5 of the upper bearing shell 2. In the rotation direction of the crankshaft, the second oil groove 4 of the lower bearing shell 1 forms a front end of the combined oil groove and the first oil groove 3 forms a rear end.

The widths of the first portions 3a, 4a of the first and second oil grooves 3, 4 of the lower bearing shell 1 correspond to the width of the oil groove 5 of the upper bearing shell 2. Also the depths of the first portions 3a, 4a of the first and second oil grooves 3, 4 of the lower bearing shell 1 correspond to the depth of the oil groove 5 of the upper bearing shell 2. The lower bearing shell 1 does not comprise any oil holes.

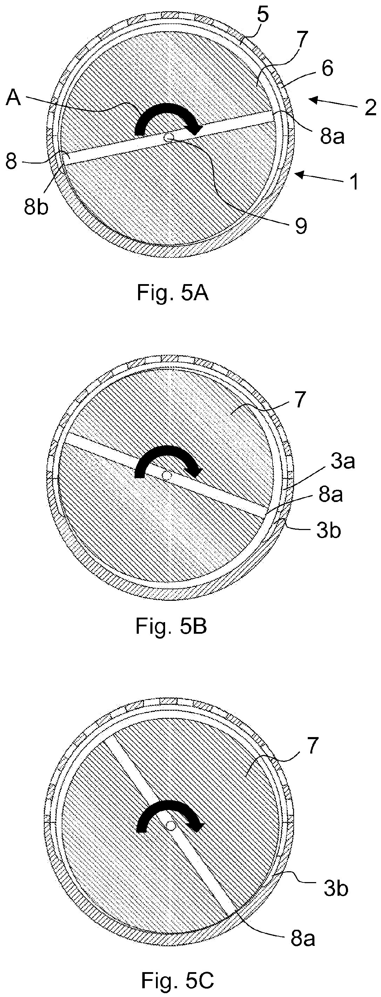

Figures 5A-5C show a cross-sectional view of a main bearing according to an embodiment of the invention at different crank angles. The bearing comprises a lower bearing shell 1 and an upper bearing shell 2. In the embodiment of figures 5A-5C, the upper bearing shell 2 is similar to the prior art bearing shell of figure 2 and the lower bearing shell 1 is similar to the bearing shell 1 of figures 3 and 4. The upper bearing shell 2 is provided with oil holes 6, through which the lubricating oil is continuously supplied into the oil groove 5 of the upper bearing shell 2.

The bearing supports a journal 7 of a crankshaft. The rotation direction of the crankshaft, which is indicated in the figures by arrow A, is in the figures clockwise. There is clearance between the journal 7 and the bearing surface, and the journal 7 can thus move within the bearing in the radial direction. The small radial movements are considerably exaggerated in figures 5A-5C to better illustrate the functioning of the bearing.

The journal 7 is provided with a radial drilling 8, which extends through the journal 7. The ends of the drilling 8 form first and second oil inlets 8a, 8b. The radial drilling 8 of the journal 7 is in fluid communication with an axial drilling 9, which is configured to supply lubricating oil to a big end bearing of at least one connecting rod. Via the connecting rod, the lubricating oil is further supplied to the small end bearing of the connecting rod. The term "axial" does not mean here that the drilling 9 is parallel to the rotation axis of the crankshaft, but that axial drilling can conduct the lubricating oil in the axial direction of the crankshaft.

In the situation of figure 5A, the first oil inlet 8a of the drilling 8 of the journal 7 is at the area of the oil groove 5 of the upper bearing shell 2. Lubricating oil can thus flow into the drilling 8 via the first oil inlet 8a.

In the situation of figure 5B, the crankshaft has rotated so that the first oil inlet 8a is at the area of the second portion 3b of the first oil groove 3 of the lower bearing shell 1. In a bearing without the second portion 3b, fluid communication between the first oil groove 3 and the first oil inlet 8a would be closed. Due to inertia forces, the journal 7 has moved in the radial direction away from the second portion 3b of the first oil groove 3. If oil supply from the first oil groove 3 into the drilling 8 of the journal 7 was prevented, the radial movement of the journal would cause underpressure. Also the inertia forces of the connecting rod and the flowing oil cause a suction effect. However, because the second portion 3b of the first oil groove 3 maintains partial oil supply into the drilling 8, forming of vapor-filled cavities in the lubricating oil is prevented.

In the situation of figure 5C, the crankshaft has rotated so that the first oil inlet 8a is not anymore at the area of the first oil groove 3 of the lower bearing shell 1. The journal 7 has moved radially to a direction, where the distance between the first oil inlet 8a and the bearing surface has decreased. This increases the pressure of the lubricating oil around the area of the first oil inlet 8a. Also, the centrifugal force affecting the oil increases the pressure. If vapor-filled cavities had been formed in an earlier phase, the cavities would collapse due to the increased pressure, which would lead to pressure pulses causing wear of the bearing. However, due to the stepwise closing of the first oil groove 3 of the lower bearing shell 1, strong pressure pulses are avoided.

The second portion 3b of the first oil groove 3 is preferably dimensioned so that the width of the second portion 3b is less than the diameter of the oil inlets 8a, 8b of the drilling 8 of the journal 7.

Even a relatively narrow second portion 3b of the first oil groove 3, for instance a groove having a width that is 5-20 percent of the width of the first portion 3a, is sufficient to prevent forming of the underpressure. If the second portion 3b is broader, for instance 20-50 percent of the width of the first portion 3a, the flow into the drilling 8 of the journal 7 continues with a greater flow rate when the oil inlet 8a, 8b moves away from the area of the first portion 3a of the first oil groove 3. This reduces the effect of the backflow caused by the centrifugal force. However, if the second portion 3b is too broad, cavitation can occur when the oil inlet 8a, 8b moves away from the area of the second portion 3b. Therefore, the width of the second portion 3b is preferably at most 50 percent of the width of the first portion 3a.

It will be appreciated by a person skilled in the art that the invention is not limited to the embodiments described above, but may vary within the scope of the appended claims.

## Claims

1. A main bearing for mounting a crankshaft in an engine block of a piston engine, the main bearing comprising a first, lower bearing shell (1) and a second, upper bearing shell (2),
wherein the inner surface of the second bearing shell (2) is provided with an oil groove (5) extending over the whole bearing shell (2) in the circumferential direction of the second bearing shell (2), and the second bearing shell (2) is provided with oil holes (6) arranged along the oil groove (5) to allow supplying lubricating oil from the outer side of the main bearing into the oil groove (5), and
wherein the first bearing shell (1) has an inner surface forming a bearing surface, the inner surface of the first bearing shell (1) being provided with a first oil groove (3) arranged in the circumferential direction of the first bearing shell (1) at a first end of the first bearing shell (1), the first oil groove (3) comprising a first portion (3a) having a constant width corresponding to the width of the oil groove (5) of the second bearing shell (2), wherein
- the first oil groove (3) comprises a second portion (3b) forming a continuation for the first portion (3a) in the circumferential direction of the first bearing shell (1), the second portion (3b) being narrower than the first portion (3a), and
- the width of the first portion (3a) of the first oil groove (3) is 15-30 percent of the width of the bearing shell (1),
**characterized in that**
- the first portion (3a) of the first oil groove (3) extends over an angle of 10-30 degrees, and
- the second portion (3b) of the first oil groove (3) extends over an angle of 10-30 degrees.

2. The main bearing according to claim 1, wherein the cross-sectional area of the second portion (3b) is smaller than the cross-sectional area of the first portion (3a).

3. The main bearing according to any of the preceding claims, wherein the width of the second portion (3b) of the first oil groove (3) is 5-50 percent of the width of the first portion (3a).

4. The main bearing according to claim 3, wherein the width of the second portion (3b) of the first oil groove (3) is 5-20 percent of the width of the first portion (3a).

5. The main bearing according to any of the preceding claims, wherein the depth of the first portion (3a) of the first oil groove (3) decreases towards the second portion (3b).

6. The main bearing according to any of the preceding claims, wherein the depth of the second portion (3b) of the first oil groove (3) decreases towards the end located away from the first portion (3a).

7. The main bearing according to any of the preceding claims, wherein the cross-section of the second portion (3b) of the first oil groove (3) is V-shaped, rectangular, semicircular or elliptic.

8. The main bearing according to any of the preceding claims, wherein the first bearing shell (1) comprises a second oil groove (4), arranged at a second end of the bearing shell (1), and the second oil groove (4) comprises a first portion (4a) and a second portion (4b) forming a continuation for the first portion (4a), the second portion (4b) being narrower than the first portion (4a).

9. A piston engine comprising a main bearing according to any of the preceding claims.

## Patentansprüche

1. Hauptlager zur Befestigung einer Kurbelwelle in einem Motorblock eines Kolbenmotors, das Hauptlager umfassend eine erste, untere Lagerschale (1) und eine zweite, obere Lagerschale (2).
wobei die Innenfläche der zweiten Lagerschale (2) mit einer Ölnut (5) versehen ist, die sich in Umfangsrichtung der zweiten Lagerschale (2) über die gesamte Lagerschale (2) erstreckt, und die zweite Lagerschale (2) mit Ölbohrungen (6) versehen ist, die entlang der Ölnut (5) angeordnet sind, um die Zufuhr von Schmieröl von der Außenseite des Hauptlagers in die Ölnut (5) zu ermöglichen, und
wobei die erste Lagerschale (1) eine eine Lagerfläche bildende Innenfläche aufweist, wobei die Innenfläche der ersten Lagerschale (1) mit einer ersten Ölnut (3) versehen ist, die in Umfangsrichtung der ersten Lagerschale (1) an einem ersten Ende der ersten Lagerschale (1) angeordnet ist, wobei die erste Ölnut (3) einen ersten Abschnitt (3a) mit einer konstanten Breite umfasst, die der Breite der Ölnut (5) der zweiten Lagerschale (2) entspricht, wobei
- die erste Ölnut (3) einen zweiten Abschnitt (3b) umfasst, der eine Fortsetzung des ersten Abschnitts (3a) in Umfangsrichtung der ersten Lagerschale (1) bildet, wobei der zweite Abschnitt (3b) schmaler ist als der erste Abschnitt (3a), und
- die Breite des ersten Abschnitts (3a) der ersten Ölnut (3) 15-30 Prozent der Breite der Lagerschale (1) beträgt, **dadurch gekennzeichnet, dass**
- sich der erste Abschnitt (3a) der ersten Ölnut (3) über einen Winkel von 10-30 Grad erstreckt, und
- sich der zweite Abschnitt (3b) der ersten Ölnut (3) über einen Winkel von 10-30 Grad erstreckt.

2. Hauptlager nach Anspruch 1, wobei die Querschnittsfläche des zweiten Abschnitts (3b) kleiner ist als die Querschnittsfläche des ersten Abschnitts (3a).

3. Hauptlager nach einem der vorstehenden Ansprüche, wobei die Breite des zweiten Abschnitts (3b) der ersten Ölnut (3) 5-50 Prozent der Breite des ersten Abschnitts (3a) beträgt.

4. Hauptlager nach Anspruch 3, wobei die Breite des zweiten Abschnitts (3b) der ersten Ölnut (3) 5-20 Prozent der Breite des ersten Abschnitts (3a) beträgt.

5. Hauptlager nach einem der vorstehenden Ansprüche, wobei die Tiefe des ersten Abschnitts (3a) der ersten Ölnut (3) zum zweiten Abschnitt (3b) hin abnimmt.

6. Hauptlager nach einem der vorstehenden Ansprüche, wobei die Tiefe des zweiten Abschnitts (3b) der ersten Ölnut (3) zum Ende hin abnimmt, das vom ersten Abschnitt (3a) entfernt ist.

7. Hauptlager nach einem der vorstehenden Ansprüche, wobei der Querschnitt des zweiten Abschnitts (3b) der ersten Ölnut (3) V-förmig, rechteckig, halbkreisförmig oder elliptisch ist.

8. Hauptlager nach einem der vorstehenden Ansprüche, wobei die erste Lagerschale (1) eine zweite Ölnut (4) umfasst, die an einem zweiten Ende der Lagerschale (1) angeordnet ist, und die zweite Ölnut (4) einen ersten Abschnitt (4a) und einen zweiten Abschnitt (4b) umfasst, der eine Fortsetzung des ersten Abschnitts (4a) bildet, wobei der zweite Abschnitt (4b) schmaler ist als der erste Abschnitt. (4a).

9. Kolbenmotor, umfassend ein Hauptlager nach einem der vorstehenden Ansprüche.

## Revendications

1. Palier principal destiné au montage d'un vilebrequin dans un bloc-moteur d'un moteur à pistons, le palier principal comprenant une première coquille de palier inférieure (1) et une seconde coquille de palier supérieure (2),
dans lequel la surface intérieure de la seconde coquille de palier (2) est munie d'une rainure d'huile (5) se prolongeant sur toute la coquille de palier (2) dans la direction circonférentielle de la seconde coquille de palier (2), et la seconde coquille de palier (2) est munie d'orifices d'huile (6) agencés le long de la rainure d'huile (5) afin de permettre l'acheminement d'huile de lubrification depuis l'extérieur du palier principal vers la rainure d'huile (5), et
dans lequel la première coquille de palier (1) présente une surface intérieure formant une surface de palier, la surface intérieure de la première coquille de palier (1) étant munie d'une première rainure d'huile (3) agencée dans la direction circonférentielle de la première coquille de palier (1) située à une première extrémité de la première coquille de palier (1), la première rainure d'huile (3) comprenant une première partie (3a) ayant une largeur constante correspondant à la largeur de la rainure d'huile (5) de la seconde coquille de palier (2), dans lequel
- la première rainure d'huile (3) comprend une seconde partie (3b) formant une continuation de la première partie (3a) dans la direction circonférentielle de la première coquille de palier (1), la seconde partie (3b) étant plus étroite que la première partie (3a), et
- la largeur de la première partie (3a) de la première rainure d'huile (3) est de 15 à 30 % de la largeur de la coquille de palier (1), **caractérisé en ce que**
- la première partie (3a) de la première rainure d'huile (3) se prolonge sur un angle de 10 à 30 degrés, et
- la seconde partie (3b) de la première rainure d'huile (3) se prolonge sur un angle de 10 à 30 degrés.

2. Palier principal selon la revendication 1, dans lequel la section transversale de la seconde partie (3b) est plus petite que la section transversale de la première partie (3a).

3. Palier principal selon l'une quelconque des revendications précédentes, dans lequel la largeur de la seconde partie (3b) de la première rainure d'huile (3) est de 5 à 50% de la largeur de la première partie (3a).

4. Palier principal selon la revendication 3, dans lequel la largeur de la seconde partie (3b) de la première rainure d'huile (3) est de 5 à 20% de la largeur de la première partie (3a).

5. Palier principal selon l'une quelconque des revendications précédentes, dans lequel la profondeur de la première partie (3a) de la première rainure d'huile (3) diminue vers la seconde partie (3b).

6. Palier principal selon l'une quelconque des revendications précédentes, dans lequel la profondeur de la seconde partie (3b) de la première rainure d'huile (3) diminue vers l'extrémité située à l'opposé de la première partie (3a).

7. Palier principal selon l'une quelconque des revendications précédentes, dans lequel la section transversale de la seconde partie (3b) de la première rainure d'huile (3) est en forme de V, rectangulaire, semi-circulaire ou elliptique.

8. Palier principal selon l'une quelconque des revendications précédentes, dans lequel la première coquille de palier (1) comprend une seconde rainure d'huile (4), agencée à une seconde extrémité de la coquille de palier (1), et la seconde rainure d'huile (4) comprend une première partie (4a) et une seconde partie (4b) formant une continuation de la première partie (4a), la seconde partie (4b) étant plus étroite que la première partie (4a).

9. Moteur à pistons comprenant un palier principal selon l'une quelconque des revendications précédentes.
